# EUROPEAN PATENT APPLICATION

(11) **EP 3 958 165 A1**
(43) Date of publication of application: **23.02.2022**
(21) Application number: 19919539.7
(22) Date of filing: 05.12.2019
(51) Int. Cl.: G06K 9/00

(54) **PORTRAIT ATTRIBUTE MODEL CREATING METHOD AND APPARATUS, COMPUTER DEVICE AND STORAGE MEDIUM**

(30) Priority: 16.04.2019 CN 201910303132
(71) Applicant: One Connect Smart Technology Co., Ltd. (Shenzhen), Shenzhen, Guangdong 518052 (CN)
(72) Inventor: YAO, Xufeng, Shenzhen Guangdong 518000 (CN); XU, Guoqiang, Shenzhen Guangdong 518000 (CN); QIU, Han, Shenzhen Guangdong 518000 (CN)
(74) Representative: dompatent von Kreisler Selting Werner - Partnerschaft von Patent- und Rechtsanwälten mbB
(86) International application number: PCT/CN2019/123422
(87) International publication number: WO 2020/211398

(57) **Abstract**

A method of establishing person image attribute model, including: obtaining face detection data and determining face regions of interest; randomly labeling person image attributes of some of the face regions of interest to obtain a training sample; training a person image attribute model according to the training sample; and optimizing the trained person image attribute model to obtain an optimized person image attribute model through an active learning algorithm, according to an unlabeled sample set as output by a trained person image attribute model.

## Description

### CROSS-REFERENCE TO RELATED APPLICATION

This application claims priority to Chinese patent application No. 2019103031324, filed with Chinese patent office on April 16, 2019, and entitled "method and device of establishing person image attribute model, computer device and storage medium", the contents of which are incorporated herein by reference in entirety.

### TECHNICAL FIELD

The present application relates to a method of establishing person image attribute model, a device of establishing person image attribute model, a computer device and a storage medium.

### BACKGROUND

With the development of AI (Artificial Intelligence) technology, AI person image technology are becoming more and more mature, which may bring much fun and conveniences (e.g., face detection access control system, AI person image photographing technology and AI person image picture synthesis technology) to people's life.

AI person image model is the basis of AI person image technology, training of the traditional AI person image model requires a large amount of data sets and labels, a large amount of time cost and economic cost must be spent on labeling labels, and it takes long time to train models using large amount of data.

Therefore, a high efficient person image attribute model construction approach is urgently needed.

### SUMMARY

A method of establishing person image attribute model, a device of establishing person image attribute model, a computer device and a storage medium are provided according to the various embodiments of the present application.

A method of establishing a person image attribute model, including:
obtaining face detection data and determining face regions of interest;
randomly labeling person image attributes of some of the face regions of interest to obtain a training sample;
training the person image attribute model according to the training sample; and
optimizing the trained person image attribute model to obtain an optimized person image attribute model through an active learning algorithm, according to an unlabeled sample set as output by a trained person image attribute model.

A device of establishing a person image attribute model, including:
a data acquisition module configured to obtain face detection data and determine face regions of interest;
a labeling module configured to randomly label person image attributes of some of the face regions of interest to obtain a training sample;
a training module configured to train a person image attribute model according to the training sample; and
a model optimization module configured to optimize the trained person image attribute model to obtain an optimized person image attribute model through an active learning algorithm, according to an unlabeled sample set as output by a trained person image attribute model.

A computer device, including a memory and one or plurality of processors, the memory stores a computer readable instruction, when the computer readable instruction is executed by the one or plurality of processors, the one or plurality of processor is caused to perform following steps of:
obtaining face detection data and determining face regions of interest;
randomly labeling person image attributes of some of the face regions of interest to obtain a training sample;
training a person image attribute model according to the training sample; and
optimizing the trained person image attribute model to obtain an optimized person image attribute model through an active learning algorithm, according to an unlabeled sample set as output by a trained person image attribute model.

One or a plurality of non-volatile computer readable storage medium which stores a computer readable instruction, when the computer readable instruction is executed by one or plurality of processors, the one or plurality of processor is caused to perform following steps of:
obtaining face detection data and determining face regions of interest;
randomly labeling person image attributes of some of the face regions of interest to obtain a training sample;
training a person image attribute model according to the training sample; and
optimizing the trained person image attribute model to obtain an optimized person image attribute model through an active learning algorithm, according to an unlabeled sample set as output by a trained person image attribute model.

The details of one or a plurality of embodiments in the present application are set forth in the following figures and descriptions, other features and advantages of the present application will become obvious from the description, the accompanying drawings and the claims.

### BRIEF DESCRIPTION OF THE DRAWINGS

In order to explain the technical solutions in the embodiments of the present application more clearly, a brief introduction regarding the accompanying drawings that need to be used for describing the embodiments is given below; it is apparent that the accompanying drawings described as follows are merely some embodiments of the present application, the person of ordinary skill in the art may also acquire other drawings according to the current drawings without paying creative labor.
FIG.1 illustrates a schematic flow diagram of a method of establishing person image attribute model according to one or a plurality of embodiments.
FIG. 2 illustrates a schematic flow diagram of a method of establishing person image attribute model in another embodiment.
FIG. 3 illustrates a schematic diagram of an optimization process of an active learning algorithm.
FIG. 4 illustrates a block diagram of a device of establishing person image attribute model according to one or a plurality of embodiments.
FIG. 5 illustrates a block diagram of a computer device according to one or a plurality of embodiments.

### DESCRIPTION OF THE EMBODIMENTS

In order to make the technical solution and the advantages of the present application be clearer and more understandable, the present application will be further described in detail below with reference to the accompanying figures and the embodiments. It should be understood that the embodiments described in detail herein are merely intended to illustrate but not to limit the present application.

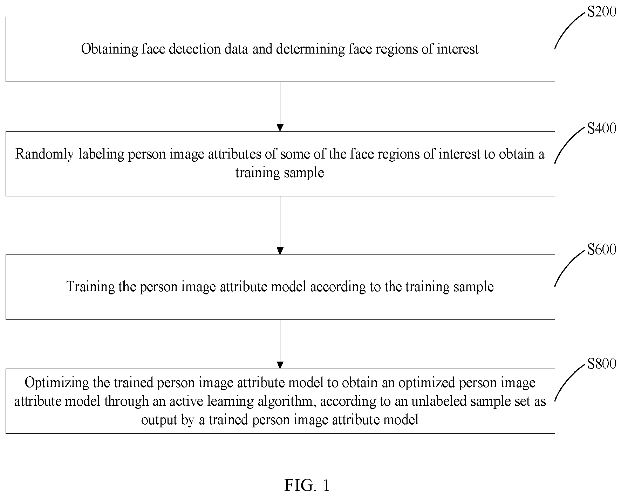

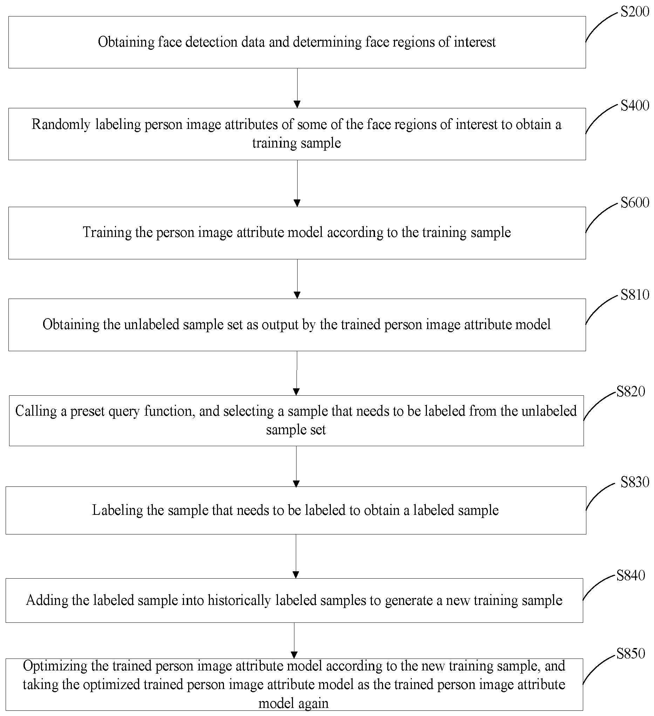

As shown in FIG. 1, a method of establishing a person image attribute model includes:
In a step of S200, obtaining face detection data and determining face regions of interest.

The face detection data refers to the data obtained after a human face detection is performed on a user, the face detection data may be obtained by performing a face detection on a sample face. The face detection data is analyzed and a face region of interest is determined. In particular, the face detection data may be input into a trained neural network model, and the face region of interest may be accurately determined through the trained neural network model.

In a step of S400, randomly labeling person image attributes of some of the face regions of interest to obtain a training sample.

The person image attributes may include 16 attributes which specifically include an age, a gender, whether there is bangs or not, whether glasses is worn or not, a makeup type, whether an eyebrow is painted or not, whether a lipstick is painted or not, whether a blusher is pained or not, a hair type, a skin condition, a face type, a comparison between an upper face and a lower face, a comparison among an upper face, a middle face and a lower face, a beard type, an eyebrow shape, and whether there is a forehead wrinkle. The face regions of interest may be used as a data set, and some of the face regions of interest in the data set are randomly selected as labeling objects, the person image attribute data corresponding to the labeling objects is acquired, for example, a selected data set is pushed to the person image attribute labeler in a manual labeling manner, the person image attribute data returned by the labeler is received, and the person image attribute data is updated to the data of the corresponding face region of interest, and the training sample is obtained.

In one embodiment, the aforesaid randomly labeling person image attributes of some of the face regions of interest to obtain the training sample may specifically include: taking the plurality of determined face regions of interest as a data set; randomly selecting some of the face regions of interest in the data set as the samples to be labeled; pushing the samples to be labeled to the server for labeling person image attribute; receiving a person image attribute labeling result as fed back by the server for labeling person image attribute, obtaining the training sample, the person image attribute labeling result is obtained by performing labeling on person image attributes of the samples to be labeled by the server for labeling person image attribute according to a set of attribute indexes to be labeled, and the set of attribute indexes to be labeled includes attribute indexes of an age, a gender, whether there is bangs or not, whether glasses is worn or not, a makeup type, whether an eyebrow is painted or not, whether a lipstick is painted or not, whether a blusher is pained or not, a hair type, a skin condition, a face type, a comparison between an upper face and a lower face, a comparison among an upper face, a middle face and a lower face, a beard type, an eyebrow shape, and whether there is a forehead wrinkle. The server for labeling person image attribute is a third-party server established based on expert's experience data. The server may use expert's experience data to label person image attribute automatically aiming at the provided set of attribute indexes to be labeled. In general, the server may perform person image attribute labeling using expert's experience data based on big data, the server has huge data processing amount and requires relatively higher server performance.

In a step of S600, training the person image attribute model according to the training sample.

The person image attribute model is a pre-established initial model, which may be an existing person image attribute model, or be an initial generic model used for establishing the person image attribute model, such as a convolutional neural network model, and the like. The person image attribute model is trained by taking the training sample as an input, and taking the person image attribute as an output. The face regions of interest are used as a data set, some samples in the data set are randomly selected to perform person image attribute labeling. The samples which are labeled by person image attributes are divided into a training set and an authentication set, the initial person image attribute model is trained according to the training set, the trained initial person image attribute model is authenticated according to the authentication set, and the person image attribute training model is obtained when the authentication of the trained initial person image attribute model is passed. Here, attributes of a few of face regions of interest are labeled, the person image attribute model is trained and authenticated, the amount of data required to be processed is reduced on the premise of ensuring that the model is accurately established. The person image attribute model may be a pre-established initial convolutional neural network model, the initial convolutional neural network model is trained by taking the obtained training sample as an input and taking the person image attributes as an output, so that a trained convolutional neural network model is obtained.

In a step of S800, optimizing, through an active learning algorithm, the trained person image attribute model to obtain an optimized person image attribute model according to the unlabeled sample set as output by the trained person image attribute model.

Active learning refers to querying the most useful unlabeled sample through certain algorithm and labeling the unlabeled samples by experts, and then training a classification model with the queried samples to improve the accuracy of the model. The active learning algorithm model includes 5 factors which are represented by A = (C, Q, S, L, U). Where, C is a group or a classifier. L is a training set selected for training the labeled samples. Q is a query function used for querying information containing large amount of information in an unlabeled sample pool U. S is a supervisor which may perform a correct label on the samples in the sample pool U. The trained person image attribute model is obtained through a few of training sets, one or a group of most useful samples (the samples containing the largest amount of information) are selected by a query function Q and are sent to the supervisor, the supervisor is caused to label the samples, then, a next model training and a next round of query are performed again through using the obtained new samples and labels, circularly performing these steps is stopped when the performance of the model meets the requirement or the unlabeled samples are insufficient. Here, the unlabeled sample set as output by the trained person image attribute model is used as input data, and the trained person image attribute model is continuously optimized through the active learning method, such that the final person image attribute model is enabled to meet the requirement of recognition of person image attribute. After the optimized person image attribute model is obtained, when recognition of person image attribute needs to be performed, a user only needs to input a photograph into the server, so that the server operates the optimized person image attribute model, outputs and feeds back the person image attribute to the user.

In the method of establishing person image attribute model, the face detection data is obtained, the human face regions of interest are determined, person image attributes of some of the face regions of interest are randomly labeled, the training sample is obtained, the person image attribute model is trained according to the training sample, the trained person image attribute model is optimized through the active learning algorithm, so that the optimized person image attribute model is obtained. In the whole process, some labeled samples are merely trained , the training time is shortened, and the trained person image attribute model is optimized using the active learning algorithm, the performance of the model is improved, and the optimized person image attribute model may realize recognition of person image attribute efficiently and accurately.

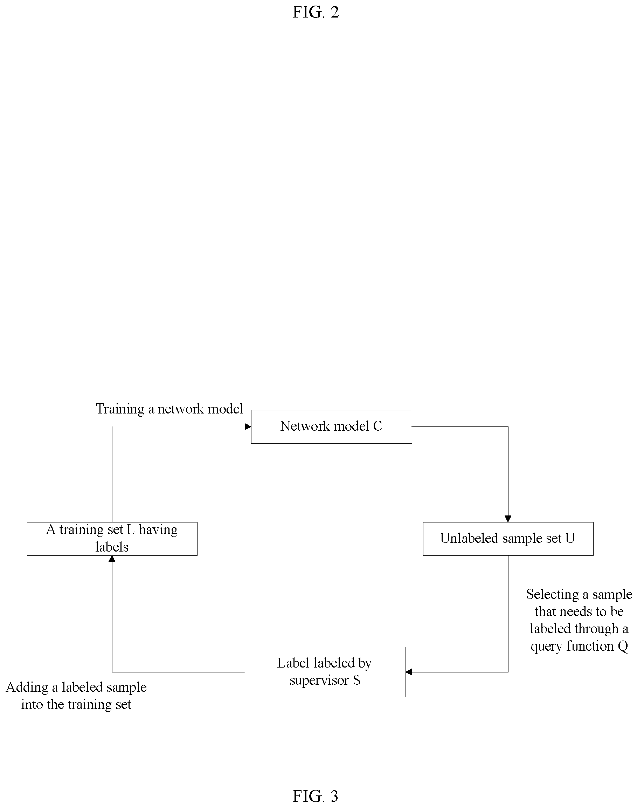

As shown in FIG. 2, in one embodiment, step S800 includes:
in a step of S810, obtaining an unlabeled sample set as output by the trained person image attribute model;
in a step of S820, calling a preset query function, and selecting a sample that needs to be labeled from an unlabeled sample set;
in a step of S830, labeling the sample that needs to be labeled to obtain the labeled sample;
in a step of S840, adding the labeled sample into historically labeled samples to generate a new training sample;
In a step of S850, optimizing the trained person image attribute model according to the new training sample, and taking the optimized trained person image attribute model as the trained person image attribute model again.

Due to the fact that the person image attribute model is obtained by training some person image attribute models which are labeled with person image attribute, labeling person image attributes on all human face regions of interest may not be possible, in order to ensure that person image attributes are accurately extracted by the finally obtained person image attribute model, the trained person image attribute model needs to be optimized. As shown in FIG. 3, when the active learning algorithm is adopted to perform optimization, the server obtains an unlabeled sample set as output by the trained person image attribute model, and selects one or more samples to be labeled from the unlabeled sample set through a preset query function Q, generally speaking, a sample with the largest amount of query information may be selected as the sample that needs to be labeled this time according to the preset query function. The supervisor S labels the sample that needs to be labeled to obtain the labeled sample Lₙ, and adds the labeled sample Lₙ into a training set L containing labels (tags) of person image feature, the previously trained person image attribute model is optimized by the training set L, and the trained person image attribute model which is optimized this time is taken as a trained person image attribute model again.

In one embodiment, obtaining face detection data, determining face regions of interest includes: obtaining the face detection data; inputting the face detection data into a trained neural network model, determining the face regions of interest, adjusting, by the trained neural network model, preset parameters in the neural network model by using a reverse propagation algorithm and a cross entropy loss, and by taking the face detection data in the sample data as input data and taking human face position in the sample data as output, until times of training reaches a preset threshold; wherein the cross entropy loss is obtained by recognizing, through the neural network model, the face detection data in the sample data to obtain a predicted face position, and training according to the data obtained by comparing the predicted face position with the face position in the sample data.

In this embodiment, a face region of interest is recognized through a trained neural network model according to the face detection data. The trained neural network model is obtained through training continuously by taking the sample face data as input data and taking the face position as output. In a practical application, aiming at acquisition of large amount of face data, and the face positions corresponding to the face data are acquired by adopting a conventional manner, the face data is taken as sample face data and is input into the initial model, the initial model is continuously trained by taking the corresponding face position as output, so that the trained neural network model is obtained. The training process described above may specifically be adjusting the preset parameter in the neural network model using the reverse propagation algorithm and the cross entropy loss, and by taking the face detection data in the sample data as input data and taking the face position in the sample data as output, until the times of training reaches a preset threshold, wherein the cross entropy loss is obtained by recognizing the face detection data in the sample data through the neural network model to obtain the predicted face position, and performing training according to data obtained by comparing the predicted face position with the face position in the sample data. The sample data may be a face object which is obtained in an acquisition history record and is used for model training, face detection is performed on the face detection data to obtain face detection data, and the corresponding face position is obtained using a conventional manner, for example, positions of various feature parts of a human face such as eyes, nose, mouth and the position of face contour may be accurately recognized through performing secondary analysis and positioning on the face detection data, and the whole face position is obtained based on the positions of these feature parts, the face detection data of the sample is input into the neural network model, and the neural network model is trained by taking the face position as the output, and the trained neural network model is obtained. Wherein the neural network model may be a convolutional neural network model which has 8 convolutional layers, 4 down-sampling layers, and 2 full-link layers.

In one embodiment, obtaining face detection data, inputting face detection data to a trained neural network model to determine face regions of interest includes: acquiring face detection data; inputting the face detection data into the trained neural network model to obtain a face position area; recognizing an edge of the face position area; and expanding a preset number of pixel distances along the edge to obtain a face region of interest.

The face detection data is input into the trained neural network model, a prediction output of the trained neural network model includes positions of multiple areas including eyes, nose, mouth, and head on the human face, a face position area is obtained and is expanded, when the face position area is expanded, a preset number of pixel distances are expanded along the edge of the face position area, and the face region of interest is determined. In a practical application, a photograph of a user may be input into a server, the server performs a face detection on the input photograph to obtain face detection data, and inputs the face detection data into the trained neural network model, face position is predicted by the trained neural network model, head position information of human face is acquired according to the face position, and the face regions of interest are finally determined by expanding according to the head position information of human face.

In one embodiment, training the person image attribute model according to the training sample includes: randomly dividing the training sample into training data and authentication data, wherein the data amount of the training data is greater than the data amount of the authentication data; training the person image attribute model by taking the face region of interest in the training data as an input and taking the person image attribute in the training data as an output; authenticating the trained person image attribute model according to the authentication data; obtaining a trained person image attribute model when authentication of the trained person image attribute model is passed; or randomly relabeling person image attributes of some of the face regions of interest to obtain a training sample, when the authentication of the trained person image attribute model is not passed.

In this embodiment, the training sample is divided into the two parts of training data and authentication data, the training data is used for training the person image attribute model, the authentication data is used to authenticate the trained person image attribute model, when the authentication is not passed, the training data is selected to train the person image attribute model once again, selecting the training data again may be selecting other parts from the previous training data or dividing the training sample into the training data and the authentication data again. That is, when the authentication is not passed, the person image attributes of some of the face regions of interest are relabeled randomly to obtain a training sample. Unnecessarily, in the process of dividing the training sample into training data and authentication data, more training data may be classified into the training data, and less training data may be classified into the authentication data.

In one embodiment, the trained person image attribute model is optimized by an active learning algorithm, after an optimized person image attribute model is obtained, a step of performing a recognition of person image attribute through the optimized person image attribute model is further included.

The optimized person image attribute model may accurately recognize the person image attribute in the input photograph and bring convenience to the user. In a practical application, the user sends the photograph to the server, when receiving the photograph as input by the user, the server performs face detection on the photograph, inputs the face detection result to the optimized person image attribute model, performs recognition of person image attribute on the optimized person image attribute model, accurately extracts the person image attribute, and feeds the extracted person image attribute back to the user. Further, the face detection result may be normalized before inputting the face detection result to the optimized person image attribute model, the server may perform normalization processing on the photograph of the face detection result by operating MATLAB software, and then input the normalized processed photograph into the optimized person image attribute model.

It should be understood that although the steps in the flow diagrams of FIGS. 1-2 are shown sequentially according to the indications of the arrows, these steps are not necessarily performed sequentially in the order indicated by the arrows. Unless there is explicit explanation in the context, performing of these steps is not strictly limited, these steps may be performed in other orders. Moreover, at least a part of the steps in FIGS. 1-2 may include multiple sub-steps or stages which are not inevitably performed and completed simultaneously, but may be performed at different times, the order of execution of these sub-steps or stages is not necessarily performed in sequence, but may be performed in turn or alternately with at least a part of other steps, or sub-steps or stages of other steps.

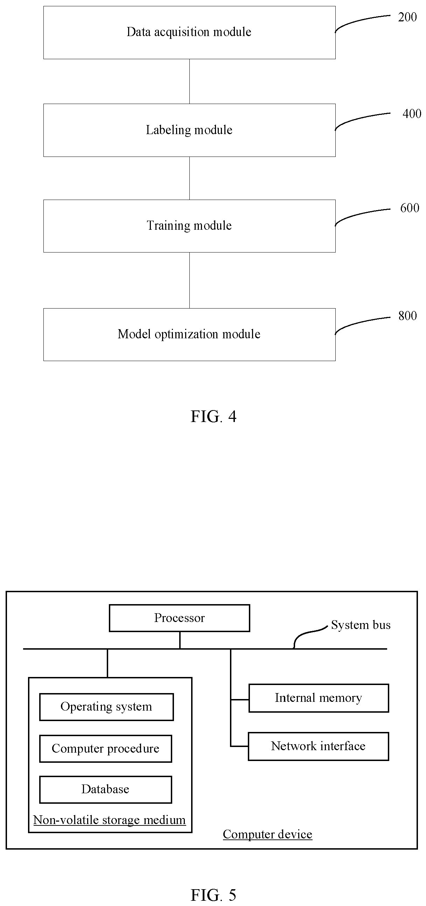

As shown in FIG. 4, a device of establishing a person image attribute model, which includes:
a data acquisition module 200 configured to obtain face detection data and determine face regions of interest;
a labeling module 400 configured to randomly label person image attributes of some of the face regions of interest to obtain a training sample;
a training module 600 configured to train a person image attribute model according to the training sample; and
a model optimization module 800 configured to optimize, through an active learning algorithm, the trained person image attribute model so as to obtain an optimized person image attribute model according to an unlabeled sample set as output by a trained person image attribute model.

In the device of establishing person image attribute model, the data acquisition module 200 is configured to obtain face detection data and determine face regions of interest, the labeling module 400 is configured to randomly label the person image attributes of some of the face regions of interest to obtain the training sample, the training module 600 is configured to train the person image attribute model according to the training sample, the model optimization module 800 is configured to optimize the trained person image attribute model so as to obtain the optimized person image attribute model through the active leaning algorithm. In the whole process, training is only performing on some labeled samples, so that training time is shortened, moreover, the trained person image attribute model is optimized using the active learning algorithm, the performance of the person image attribute model is improved, the optimized person image attribute model may realize recognition of person image attribute high efficiently and accurately.

In one embodiment, the model optimization module 800 is further configured to obtain the unlabeled sample set as output by the trained person image attribute model; to call a preset query function, and select a sample that needs to be labeled from the unlabeled sample set; to label the sample that needs to be labeled to obtain a labeled sample; to add the labeled sample into historically labeled samples to generate a new training sample; and to optimize the trained person image attribute model according to the new training sample, and take the optimized trained person image attribute model as a trained person image attribute model again.

In one embodiment, the labeling module 400 is further configured to take a plurality of determined face regions of interest as a data set; to randomly select some of the face regions of interest in the data set to be samples to be labeled; to push the samples to be labeled to a server for labeling person image attribute; and to receive a person image attribute labeling result as fed back by the server for labeling person image attribute so as to obtain a training sample, wherein the person image attribute labeling result is obtained by performing labeling on person image attributes of the samples to be labeled by the server for labeling person image attribute according to a set of attribute indicators to be labeled, and the set of attribute indicators to be labeled includes attribute indicators of an age, a gender, whether there is bangs or not, whether glasses is worn or not, a makeup type, whether an eyebrow is painted or not, whether a lipstick is painted or not, whether a blusher is pained or not, a hair type, a skin condition, a face type, a comparison between an upper face and a lower face, a comparison among an upper face, a middle face and a lower face, a beard type, an eyebrow shape, and whether there is a forehead wrinkle.

In one embodiment, the data acquisition module 200 is further configured to obtain the face detection data; to input the face detection data into a trained neural network model to determine face regions of interest, so that the trained neural network model takes the face detection data in the sample data as input data and takes a face position in the sample data as an output, uses a reverse propagation algorithm and a cross entropy loss to adjust a preset parameter in the neural network model until times of training reaches a preset threshold, wherein the cross entropy loss is obtained by recognizing the face detection data in the sample data to obtain a predicted face position through the neural network model, and performing training according to data obtained by comparing the predicted face position with the face position in the sample data.

In one embodiment, the data acquisition module 200 is further configured to obtain the face detection data; to input the face detection data into the trained neural network model so as to obtain a face position area; to recognize an edge of a face position area; and to expand a preset number of pixel distances along the edge to obtain the face regions of interest.

In one embodiment, the training module 600 is further configured to randomly divide the training sample into training data and authentication data, wherein a data amount of the training data is greater than a data amount of the authentication data; to train the person image attribute model by taking the face region of interest in the training data as an input and taking the person image attribute in the training data as an output; to authenticate the trained person image attribute model according to the authentication data; to obtain a trained person image attribute model, when authentication of the trained person image attribute model is passed; or to randomly relabel person image attributes of some of the face regions of interest to obtain a training sample, when authentication of the trained person image attribute model is not passed.

Regarding the specific limitations of the device of establishing person image attribute model, reference can be made to the descriptions of the method of establishing person image attribute model described above, they are not repeatedly described herein. A part or a whole of the aforesaid various modules in the device of establishing person image attribute model may be implemented according to software, hardware or the combination of software and hardware. The aforesaid various modules may be embedded in or be independent of the processor of the computer device in the form of hardware and may also be stored in the memory of the computer device in the form of software, so that the processor calls and performs the operations corresponding to the aforesaid modules.

In one embodiment, a computer device is provided, the computer device may be a server, and an internal architecture of the server may be shown in FIG. 5. The computer device includes a processor, a memory, a network interface, and a database which are connected by a system bus. Wherein, the processor of the computer device is configured to provide computing and control capabilities. The memory of the computer device includes a non-volatile storage medium, and an internal memory. The non-volatile storage medium stores an operating system, a computer program, and a database. The internal memory provides an environment for the operation of the operating system and the computer program in the non-volatile storage medium. A database of the computer device is used to store sample face data or sample face detection data. The network interface of the computer device is used to communicate with an external terminal through network connection. The computer program is configured to be executed by the processor so as to realize a person image attribute model method method of establishing person image attribute model.

The person of ordinary skill in the art may be aware of that, the architecture shown in FIG. 5 is merely a block diagram of the structure of the part related with the technical solutions of the present application, and is not constituted as limitation to the technical solutions of the present application which are applied on the computer device, the computer device may specifically include more or less components shown in FIG. 5, or combine some components or have different component arrangement.

A computer device, including a memory and one or plurality of processors, the memory stores a computer readable instruction, when the computer readable instruction is executed by the one or plurality of processors, the one or plurality of processor is caused to perform steps of the method of establishing person image attribute model provided in any one of the embodiments of the present application.

One or a plurality of non-volatile computer readable storage medium which stores a computer readable instruction, when the computer readable instruction is executed by one or plurality of processors, the one or plurality of processor is caused to perform steps of the method of establishing person image attribute model provided in any one of the embodiments of the present application.

The person of ordinary skilled in the art may be aware of that, a whole or a part of flow process of implementing the method in the aforesaid embodiments of the present application may be accomplished by using computer program to instruct relevant hardware. The computer program may be stored in a non-volatile computer readable storage medium, when the computer program is executed, the steps in the various method embodiments described above may be included. Any references to memory, storage, databases, or other media used in the embodiments provided herein may include non-volatile and/or volatile memory. The non-volatile memory may include ROM (Read Only Memory), programmable ROM, EPROM (Electrically Programmable Read Only Memory), EEPROM (Electrically Erasable Programmable Read Only Memory), or flash memory. The volatile memory may include RAM (Random Access Memory) or external cache memory. By way of illustration instead of limitation, RAM is available in a variety of forms such as SRAM (Static RAM), DRAM (Dynamic RAM), SDRAM (Synchronous DRAM), DDR (Double Data Rate) SDRAM, ESDRAM (Enhanced SDRAM), Synchlink DRAM, RDRAM (Rambus Direct RAM), DRDRAM (Direct Memory Bus Dynamic RAM), and RDRAM (Memory Bus Dynamic RAM), etc.

The various technical features in the embodiments described above may be combined arbitrarily, for the conciseness of the description, all possible combinations of the technical features in these embodiments are not described. However, all possible combinations of these technical features should be considered as being fallen into the scope of the description of the present application as long as there doesn't exists conflict in the combinations of these technical features.

Several implementation methods of the present application are described in the embodiments described above, and the descriptions of these implementation modes are specific and in detail, but should not be interpreted as limitations to the patent protection scope of the present application. It should be noted that, as for the person of ordinary skill in the art, the person of ordinary skill in the art may also make some modifications and improvements without breaking away from the inventive concept of the present application, and these modifications and improvements are all included in the protection scope of the present application. Thus, the protection scope of the present application should be determined by the attached claims.

## Claims

1. A method of establishing a person image attribute model, comprising:
obtaining face detection data and determining face regions of interest;
randomly labeling person image attributes of some of the face regions of interest to obtain a training sample;
training the person image attribute model according to the training sample; and
optimizing the trained person image attribute model to obtain an optimized person image attribute model through an active learning algorithm, according to an unlabeled sample set as output by a trained person image attribute model.

2. The method according to claim 1, **characterized in that**, said optimizing the trained person image attribute model to obtain an optimized person image attribute model through an active learning algorithm, according to an unlabeled sample set as output by a trained person image attribute model comprises:
obtaining the unlabeled sample set as output by the trained person image attribute model;
calling a preset query function, and selecting a sample that needs to be labeled from the unlabeled sample set;
labeling the sample that needs to be labeled to obtain a labeled sample;
adding the labeled sample into historically labeled samples to generate a new training sample; and
optimizing the trained person image attribute model according to the new training sample, and taking the optimized trained person image attribute model as the trained person image attribute model again.

3. The method according to claim 1, **characterized in that**, said randomly labeling person image attributes of some of the face regions of interest to obtain a training sample comprises:
taking a plurality of determined face regions of interest as a data set;
randomly selecting some of the face regions of interest in the data set to be samples to be labeled;
pushing the samples to be labeled to a server for labeling person image attribute; and
receiving a person image attribute labeling result as fed back by the server for labeling person image attribute to obtain the training sample, wherein the person image attribute labeling result is obtained by performing labeling on person image attributes of the samples to be labeled by the server for labeling person image attribute according to a set of attribute indicators to be labeled, and the set of attribute indicators to be labeled comprises attribute indicators of an age, a gender, whether there is bangs or not, whether glasses is worn or not, a makeup type, whether an eyebrow is painted or not, whether a lipstick is painted or not, whether a blusher is pained or not, a hair type, a skin condition, a face type, a comparison between an upper face and a lower face, a comparison among an upper face, a middle face and a lower face, a beard type, an eyebrow shape, and whether there is a forehead wrinkle.

4. The method according to claim 1, **characterized in that**, said obtaining face detection data and determining face regions of interest comprises:
obtaining the face detection data; and
inputting the face detection data into a trained neural network model to determine face regions of interest, so that the trained neural network model takes the face detection data in the sample data as input data and takes a face position in the sample data as an output, uses a reverse propagation algorithm and a cross entropy loss to adjust a preset parameter in the neural network model until times of training reaches a preset threshold, wherein the cross entropy loss is obtained by recognizing the face detection data in the sample data to obtain a predicted face position through the neural network model, and performing training according to data obtained by comparing the predicted face position with the face position in the sample data.

5. The method according to claim 4, **characterized in that**, said inputting the face detection data into a trained neural network model to determine face regions of interest comprises:
obtaining the face detection data;
inputting the face detection data into the trained neural network model to obtain a face position area;
recognizing an edge of the face position area; and
expanding a preset number of pixel distances along the edge to obtain a face region of interest.

6. The method according to claim 4, **characterized in that**, said inputting the face detection data into a trained neural network model to determine face regions of interest comprises:
obtaining the face detection data;
inputting the face detection data into the trained neural network model to obtain a face position area;
obtaining face head position information according to the face position area; and
obtaining the face regions of interest by expanding according to the face head position information.

7. The method according to claim 4, **characterized in that**, the neural network model comprises a convolutional neural network model which has 8 convolutional layers, 4 down-sampling layers and 2 full-link layers.

8. The method according to claim 1, **characterized in that**, said training the person image attribute model according to the training sample comprises:
randomly dividing the training sample into training data and authentication data, wherein a data amount of the training data is greater than a data amount of the authentication data;
training the person image attribute model by taking a face region of interest in the training data as an input, and taking a person image attribute in the training data as an output;
authenticating the trained person image attribute model according to the authentication data;
obtaining a trained person image attribute model, when authentication of the trained person image attribute model is passed; and
randomly relabeling person image attributes of some of the face regions of interest to obtain a training sample, when authentication of the trained person image attribute model is not passed.

9. The method according to claim 1, **characterized in that**, the method further comprises:
performing a recognition of person image attribute through the optimized person image attribute model, after said optimizing the trained person image attribute model to obtain an optimized person image attribute model through an active learning algorithm, according to an unlabeled sample set as output by a trained person image attribute model.

10. A device of establishing a person image attribute model, **characterized in that**, the method comprises:
a data acquisition module configured to obtain face detection data and determine face regions of interest;
a labeling module configured to randomly label person image attributes of some of the face regions of interest to obtain a training sample;
a training module configured to train a person image attribute model according to the training sample; and
a model optimization module configured to optimize the trained person image attribute model to obtain an optimized person image attribute model through an active learning algorithm, according to an unlabeled sample set as output by a trained person image attribute model.

11. The device according to claim 10, **characterized in that**, the model optimization module is further configured to obtain the unlabeled sample set as output by the trained person image attribute model; to call a preset query function and select a sample that needs to be labeled from the unlabeled sample set; to label the sample that needs to be labeled to obtain a labeled sample; to add the labeled sample into historically labeled samples to generate a new training sample; and to optimize the trained person image attribute model according to the new training sample and take the optimized trained person image attribute model as a trained person image attribute model again.

12. The device according to claim 10, **characterized in that**, the labeling module is further configured to take a plurality of determined face regions of interest as a data set; to randomly select some of the face regions of interest in the data set to be samples to be labeled; to push the samples to be labeled to a server for labeling person image attribute; and to receive a person image attribute labeling result as fed back by the server for labeling person image attribute so as to obtain a training sample, wherein the person image attribute labeling result is obtained by performing labeling on person image attributes of the samples to be labeled by the server for labeling person image attribute according to a set of attribute indicators to be labeled, and the set of attribute indicators to be labeled comprises attribute indicators of age, gender, whether there is bangs or not, whether glasses is worn or not, a makeup type, whether an eyebrow is painted or not, whether a lipstick is painted or not, whether a blusher is pained or not, a hair type, a skin condition, a face type, a comparison between an upper face and a lower face, a comparison among an upper face, a middle face and a lower face, a beard type, an eyebrow shape, and whether there is a forehead wrinkle.

13. The device according to claim 10, **characterized in that**, the data acquisition module is further configured to obtain the face detection data; and to input the face detection data into a trained neural network model to determine face regions of interest, so that the trained neural network model takes the face detection data in the sample data as input data and takes a face position in the sample data as an output, uses a reverse propagation algorithm and a cross entropy loss to adjust a preset parameter in the neural network model until times of training reaches a preset threshold, wherein the cross entropy loss is obtained by recognizing the face detection data in the sample data to obtain a predicted face position through the neural network model, and performing training according to data obtained by comparing the predicted face position with the face position in the sample data.

14. The device according to claim 13, **characterized in that**, the data acquisition module is further configured to obtain the face detection data; to input the face detection data into the trained neural network model to obtain a face position area; to recognize an edge of a face position area; and to expand a preset number of pixel distances along the edge to obtain the face regions of interest.

15. A computer device, comprising a memory and one or plurality of processors, the memory stores a computer readable instruction, when the computer readable instruction is executed by the one or plurality of processors, the one or plurality of processor is caused to perform following steps of:
obtaining face detection data and determining face regions of interest;
randomly labeling person image attributes of some of the face regions of interest to obtain a training sample;
training a person image attribute model according to the training sample; and
optimizing the trained person image attribute model to obtain an optimized person image attribute model through an active learning algorithm, according to an unlabeled sample set as output by a trained person image attribute model.

16. The computer device according to claim 15, **characterized in that**, the processor is further configured to, when executing the computer readable instruction, perform following steps of:
obtaining the unlabeled sample set as output by the trained person image attribute model;
calling a preset query function, and selecting a sample that needs to be labeled from the unlabeled sample set;
labeling the sample that needs to be labeled to obtain a labeled sample;
adding the labeled sample into historically labeled samples to generate a new training sample; and
optimizing the trained person image attribute model according to the new training sample, and taking the optimized trained person image attribute model as the trained person image attribute model again.

17. The computer device according to claim 15, **characterized in that**, the processor is further configured to, when executing the computer readable instruction, perform following steps of:
taking a plurality of determined face regions of interest as a data set;
randomly selecting some of the face regions of interest in the data set to be samples to be labeled;
pushing the samples to be labeled to a server for labeling person image attribute; and
receiving a person image attribute labeling result as fed back by the server for labeling person image attribute so as to obtain a training sample, wherein the person image attribute labeling result is obtained by performing labeling on person image attributes of the samples to be labeled by the server for labeling person image attribute according to a set of attribute indicators to be labeled, and the set of attribute indicators to be labeled comprises attribute indicators of age, gender, whether there is bangs or not, whether glasses is worn or not, a makeup type, whether an eyebrow is painted or not, whether a lipstick is painted or not, whether a blusher is pained or not, a hair type, a skin condition, a face type, a comparison between an upper face and a lower face, a comparison among an upper face, a middle face and a lower face, a beard type, an eyebrow shape, and whether there is a forehead wrinkle.

18. One or a plurality of non-volatile computer readable storage medium which stores a computer readable instruction, when the computer readable instruction is executed by one or plurality of processors, the one or plurality of processor is caused to perform following steps of:
obtaining face detection data and determining face regions of interest;
randomly labeling person image attributes of some of the face regions of interest to obtain a training sample;
training a person image attribute model according to the training sample; and
optimizing the trained person image attribute model to obtain an optimized person image attribute model through an active learning algorithm, according to an unlabeled sample set as output by a trained person image attribute model.

19. The storage medium according to claim 18, **characterized in that**, the computer readable instruction is further configured to, when being executed by the processor, cause the processor to perform following steps of:
obtaining the unlabeled sample set as output by the trained person image attribute model;
calling a preset query function, and selecting a sample that needs to be labeled from the unlabeled sample set;
labeling the sample that needs to be labeled to obtain a labeled sample;
adding the labeled sample into historically labeled samples to generate a new training sample; and
optimizing the trained person image attribute model according to the new training sample, and taking the optimized trained person image attribute model as the trained person image attribute model again.

20. The storage medium according to claim 18, **characterized in that**, the computer readable instruction is further configured to, when being executed by the processor, cause the processor to perform following steps of:
taking a plurality of determined face regions of interest as a data set;
randomly selecting some of the face regions of interest in the data set to be samples to be labeled;
pushing the samples to be labeled to a server for labeling person image attribute; and
receiving a person image attribute labeling result as fed back by the server for labeling person image attribute so as to obtain a training sample, wherein the person image attribute labeling result is obtained by performing labeling on person image attributes of the samples to be labeled by the server for labeling person image attribute according to a set of attribute indicators to be labeled, and the set of attribute indicators to be labeled comprises attribute indicators of age, gender, whether there is bangs or not, whether glasses is worn or not, a makeup type, whether an eyebrow is painted or not, whether a lipstick is painted or not, whether a blusher is pained or not, a hair type, a skin condition, a face type, a comparison between an upper face and a lower face, a comparison among an upper face, a middle face and a lower face, a beard type, an eyebrow shape, and whether there is a forehead wrinkle.
